Europäisches Patentamt

European Patent Office

Office européen des brevets

(19)

(11) Publication number: **0 160 488 B1**

# EUROPEAN PATENT SPECIFICATION

(12)

(45) Date of publication of patent specification: **12.06.91**  (51) Int. Cl.⁵: **G01N 22/00, G01N 22/02**

(21) Application number: **85302811.6**

(22) Date of filing: **22.04.85**

(54) Method for measuring orientation of constituents of sheets.

(30) Priority: **25.04.84 JP 84916/84**

(43) Date of publication of application:
**06.11.85 Bulletin 85/45**

(45) Publication of the grant of the patent:
**12.06.91 Bulletin 91/24**

(84) Designated Contracting States:
**DE FR GB SE**

(56) References cited:
**US-A- 3 103 627**
**US-A- 3 254 298**
**US-A- 3 807 868**

(73) Proprietor: **KANZAKI PAPER MANUFACTUR-
ING CO., LTD**
**9-8 Yonchome Ginza Chuo-ku**
**Tokyo 104(JP)**

(72) Inventor: **Osaki, Shigeyoshi**
**1-2-9 Minami-Hibarigaoka**
**Takarazuka Hyogo(JP)**
Inventor: **Fujii, Yoshihiko**
**4-5-12 Minami-Mikunigaoka**
**Sakai Osaka(JP)**

(74) Representative: **Seaborn, George Stephen et
al**
**c/o Edward Evans & Co. Chancery House**
**53-64 Chancery Lane**
**London WC2A 1SD(GB)**

## Description

The present invention relates to a method and apparatus for measuring the molecular orientation of webs or sheets.

## BACKGROUND ART

Conventionally, in the production of plastic sheets, a non-stretched sheet is produced either by the tubular film process in which the sheet material is first heated or friction-melted to be given fluidity and then extruded into a cylindrical form, into which air is blown to inflate it and at the same time it is externally cooled for solidification or by the T-die process in which the melt is extruded into a smooth thin film form and then cooled for solidification in a water tank or on a cooling drum. However, such non-stretched sheet is too inferior in such mechanical strengths as tensile strength, impact strength and tear strength and in processability to be used as such. Thus, to obtain a sheet of good quality, the non-stretched sheet is heated to a suitable temperature above its softening point or below its melting point and subjected to uniaxial or biaxial stretching to improve its physical properties. In such stretching process, it does not necessarily follow that simply mechanically stretching the non-stretched sheet provides a sheet of good quality, but it is necessary that the stretching be performed to provide a particular orientation of molecules to agree with the intended use of the sheet product.

Further, a consideration will be given to a ceramic sheet. In production, a fine ceramic powder is mixed with a binding agent and a lubricant to produce a slip, which is then poured onto a continuously traveling tape of polyethylene or Teflon, and after the thickness of the slip layer on the tape is adjusted as by a doctor, it is fired and finished, the process being called the tape casting forming method, whereby a ceramic sheet in thin film form is obtained. Such thin film-like ceramic sheets are used as a material for laminated ceramic capacitors, for example, by laminating them alternately with electrodes. For the application of ceramic sheets to such use, it is of utmost importance from the standpoint of securing the quality of capacitors at high level that the dielectric constant across the width of ceramic sheets be substantially uniform. Therefore, a checkup of widthwise molecular orientation corresponding to dielectric constant must be made so that only those ceramic sheets which are appropriate may be used. Thus, said plastic films and ceramic films must be tested for their molecular orientation.

In the prior technique of producing these film sheets, as soon as the roll is wound up at the winder part of said stretching machine or tape casting forming device, a sample is taken and tested for the presence or absence of abnormality of molecular orientation as by elastic modulus measurement, X-ray diffraction method, or infrared absorption spectroanalysis. With these methods, however, there is a troublesome procedure for setting a sample strip such as a sheet or a sample portion in the measuring mechanism and take a long time in ascertainning the abnormality of molecular orientation. Thus, a large amount of reject would be produced before the completion of the checkup of molecular orientation of the sheet product across the entire width of the processing machine.

With the above in mind, we have conducted an intensive study with a view to developing an apparatus which is easy to handle and capable of making measurements in a short time. In this connection, in order to ascertain the orientation state of the constituent, i.e., molecules of a sheet, we have investigated the use of and experimented with a microwave of a nature attenuating in accordance with the presence of molecules and we have found that if linearly polarized microwaves(hereinafter referred to as linearly polarized waves) are applied, at right angles, to the sheet surface while relatively rotating the sheet in its plane, the amount of attenuation increases or decreases with the rotative angle and that the angle at which the maximum amount of attenuation is exhibited coincides with the direction of orientation of fibers or molecules.

The principle of the invention, in a simple model based on the following equation, is supported by the assumption that where molecules of a sheet are oriented at an angle $\theta$ from the x-axis, the amount of attenuation is at a maximum in a plane of polarization of microwaves where $\theta = \psi$.

$$\Delta w = C_1 \frac{n_0 N_0 H^2 \cos^2(\theta - \psi)}{P} + C_2$$

$\Delta W$:     Amount of attenuation of microwaves

$n_0$:     Number of molecules being capable of microwave-induced movement

$N_o$:     Number of molecules in orientation per unit volume

$\mu$:     Effective dipole moment of molecules

$\theta$:     Angle between dipole moment of molecules and x-axis

$\psi$:     Angle of plane of polarization of waves measured counterclockwise from x-axis

$\Gamma$:     Constant of elastic restoring force

$C_1,C_2$:     Constants.

## SUMMARY OF THE INVENTION

The present invention, intended to achieve the aforesaid object, provides a method and apparatus for measuring the orientation of the constituents of web or sheet products by using a cavity resonator composed of a pair of waveguides having in their bottoms a transmitting antenna and a receiving antenna, respectively, and opposed at their openings to each other with a small clearance defined therebetween, said method comprising the steps of:

inserting a sample portion of said web or sheet product into said small clearance,

emitting linearly polarized microwaves from said transmitting antenna toward said open ends to allow them to fall on the surface of said sample portion at right angles thereto while producing a relative motion between the plane of polarization of microwaves and said sample portion around the axis of said cavity resonator,

receiving the microwaves guided from the waveguide disposed on the transmitting side via the sample portion in said clearance to the waveguide disposed on the receiving side so as to find the amount of microwaves absorbed by said sample portion, and

determining the orientation of the constituents of said web or sheet product from the angular position of said sample portion, where said amount of absorption is at a maximum, relative to said plane of polarization.

In particular, it is noted that the orientation to be measured is generally the molecular orientation of said web or sheet.

## BRIEF DESCRIPTION OF THE DRAWINGS

Fig. 1 is a diagram schematically showing an apparatus constructed to measure the molecular orientation of sheets according to the method of the present invention;

Fig. 2 is a graph showing a microwave attenuation-angle characteristic which forms the basis of determination of orientation recorded on a chart in the recording section of the apparatus shown in Fig. 1;

Fig. 3 is a diagram showing another embodiment of an apparatus of the invention for determining the molecular orientation of sheets;

Fig. 4 is a view showing an embodiment of a continuously measuring apparatus, which is a further developed form of the apparatus of Fig. 3;

Fig. 5 is a closed curve diagram obtained by converting the microwave attenuation-angle (orientation) curve of polyethylene terephthalate sheet according to the invention into an X-Y polar coordinate system to indicate amounts of attenuation of microwaves in terms of distances from the origin;

Fig. 6 is an X-Y recorder graph showing the widthwise distribution of molecular orientation of the same polyethylene terephthalate sheet;

Fig. 7 is a closed curve diagram, similar to Fig. 5, wherein the orientation of the molecules of a ceramic sheet made from silicate alumina is measured in accordance with the invention; and

Fig. 8 is a schematic diagram showing the embodiment of a biaxial stretching machine for processing sheet materials in accordance with the invention.

## BEST MODE FOR CARRYING OUT THE INVENTION

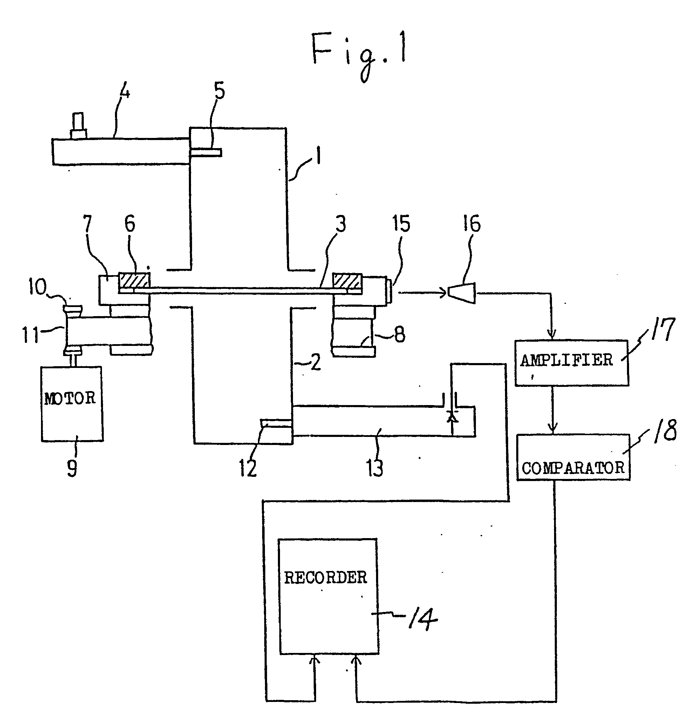

The apparatus for carrying out the method of the present invention will now be described in detail with reference to the drawings. Fig. 1 schematically shows an embodiment of an apparatus used in the sheet orientation measuring method according to the invention. The numeral 4 denotes an oscillator which emits linearly polarized microwaves of 3 GHz, for example. The microwaves are emitted from an emitting antenna 5 so that they fall on the surface of a sheet 3 always at right angles thereto. In addition, microwaves which are usable are in the range of hundreds of MHz to 100 GHz, but since attenuation due to the rearrangement of the molecules of sheets takes place more readily in the vicinity of 3-5 GHz, it is more preferable to use microwaves of about 1-50 GHz including that portion. As for sheets to be measured, mention may be made of plastic sheets such as are made of polyethylene, polyoxymethylene, polyvinyl chloride, polyvinylidene fluoride, polyethylene terephthalate, polyamides, polyimides, or copolymers of their and other polymers, and ceramic sheets such as are made of alumina, alumina silicate, barium titanate, titanium oxide, silicon carbide, or strontium titanate. In addition, since microwaves tend to be attenuated more strongly when molecules have polarity, those of said sheets which have polar groups in their molecules can be efficiently measured. As for samples, those in the form of circles or quadrangles larger than the flange of an upper waveguide 1 are used. To retain such sheet 3 in a clearance defined between the upper waveguide 1 and a lower waveguide 2, a sheet fixing block 7 or the like having a keep ring plate 6 in the upper groove section is installed.

To rotate the sheet fixing block 7 with the sheet fixed thereon at a fixed speed, there is employed a method in which for example as shown in Fig. 1, a drive belt 11 is entrained in a belt drive groove 8 formed in the lateral lower portion of the sheet fixing block 7 and in a groove in a drive pulley 10 and a variable speed motor 9 is driven. The linearly polarized microwaves attenuated by the molecules in the sheet 3 are received by a receiving antenna 12 after they have passed through the lower waveguide 2, and then they are converted into electric signals. Such electric signals are demodulated by a detector 13 and then recorded by a recorder 14.

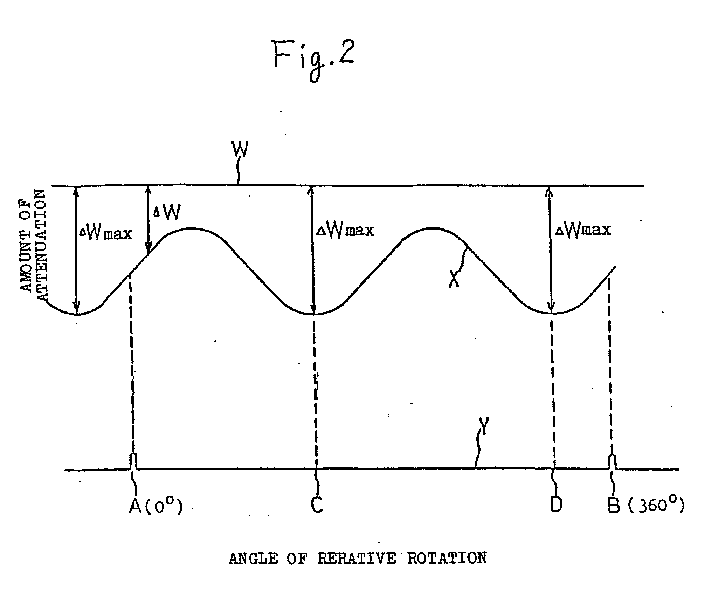

The detected output curve recorded on the chart in the recorder is as shown at X in Fig 2. To provide a rotative angle reference for this detected output curve X, for example as shown in Fig. 1, a narrow reflecting tape 15 is applied to a place on the lateral surface of the sheet fixing block 7 so that variations In reflectance of monitor light are detected during rotation by an optical sensor 16 and the resulting electric signals are transferred via an amplifier 17 and a comparator 18 to the recorder 14, whereby they are recorded on the chart as shown at Y in Fig. 2. In addition, since the transverse or longitudinal direction of the sheet is known in advance, the sheet 3, when attached to the sheet fixing block 7, is positioned so that for example the upstream side of the longitudinal direction is the direction of the reflecting tape 15. As a result of this arrangement, since the angle of the peak A or B of the optical sensor signal Y in Fig. 2 always indicates the upstream side of the longitudinal direction, the angle of such peak can be used as the reference angle. Further, since the distance from the peak A to the next peak B represents one revolution of the sheet, it is $360°$. Therefore, since the direction of molecular orientation is associated with the angle at which the attenuation of the detected output curve X is at a maximum, as described above, C and D in Fig. 2 correspond thereto and the angle from the reference can be found by computation.

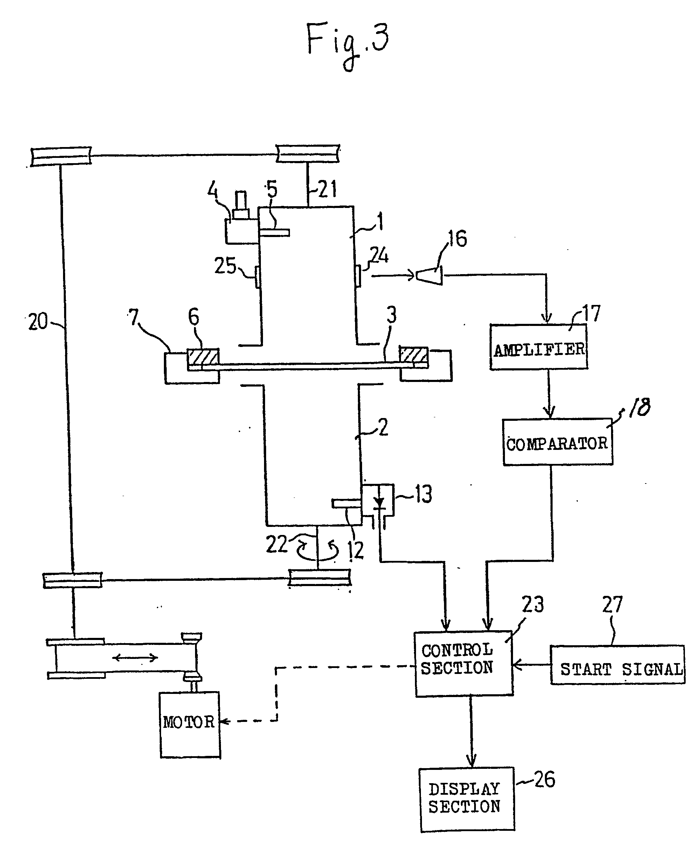

An embodiment shown in Fig. 3 is the same as that shown in Fig. 1 in that the sheet 3 is fixed on the sheet fixing block 7 by the keep ring plate 6 and is held between the upper and lower waveguides 1 and 2, but it differs in that the waveguides 1 and 1 can be rotated while the sheet 3 is kept fixed without being rotated. The synchronous rotation of the upper and lower waveguides 1 and 2 is achieved, as shown in Fig. 3, by connecting a reversible motor 19, a drive shaft 20, and waveguide main shafts 21 and 22 by means of belts.

In addition, it is desirable that the angle of rotation of the waveguides be set at a value greater than the angle of $180°$ needed for measurement, and the initial waiting angle and the next waiting angle can be defined by installing optical sensors, limit switches or the like for detecting the angles, at suitable positions.

While Fig. 3 shows the method of rotating the waveguides by using pulleys and belts, depending upon the objective there may be employed a method of directly rotating the plane of linear polarization as by connecting separate electric motors directly to the ends of the waveguides or applying a magnetic field to the upper waveguide.

The linearly polarized microwaves attenuated by the molecules in the sheet 3, after passing through the lower waveguide 2, is received by the receiving antenna 12 and then converted into electric signals. Such electric signals are demodulated by a detector 13 and transferred to a control section 23.

To provide a rotative angle reference for this received out for example, as shown in Fig. 3, narrow reflecting tapes 24 and 25 are applied, $180°$ apart, to two places on the lateral surface of the upper waveguide 1 so that variations in reflectance of monitor light are detected during rotation by an optical sensor 16 and the resulting electric signals are transferred via an amplifier 17 and a comparator 18 to a control section 23. In addition, since the transverse or longitudinal direction of the sheet is known in advance, the sheet 3, when attached to the sheet fixing block 7, is positioned so that for example the upstream side of the longitudinal direction is the direction of the reflecting tape 24. As a result of this arrangement, when the signal from the reflecting tape 24 is transferred from the optical sensor 16, it always indicates the upstream side of the longitudinal direction, so that such angle can be used as the reference angle.

Measurement is started when a measurement start signal enters the control section 23. The control section 23, on the basis of a program inputted thereinto in advance, emits a forward rotation start signal to the reversible motor 19, so that the two waveguids 1 and 2 start rotating in the forward direction from the initial waiting angle. The control section 23 soon receives from the optical sensor 16 a signal indicating that the reflecting tape 24 has passed by, and it stores this signal as the measurement start angle and thereafter it also receives a signal notifying the passage of the reflecting tape 25 and stores this signal as the measurement termination angle and emits an operation stop signal to the reversible motor 19, stopping the waveguides 1 and 2 at the next waiting angle. The control section 23 computes the received resonance output values corresponding to the individual angles of rotation inputted thereinto from the detector 13 during the internal from measurement start angle to measurement stop angle, and according to the need it delivers its output to a display section 26 such as a CRT or an X-Y plotter.

Next, the sample on the sheet fixing block 7 is exchanged and a measurement start signal 27 is inputted again. The control section 23 this time gives a reverse rotation command to the reversible motor 19, causing the waveguides 1 and 2 to follow the course which is reverse to the previous one, so that the waveguides 1 and 2 are brought back to the initial waiting angle. Thereafter, the aforesaid procedure is repeated a predetermined number of times. In addition, in the case of the reverse rotation, too, the same computing operation is performed and the result is outputted to the display section 26.

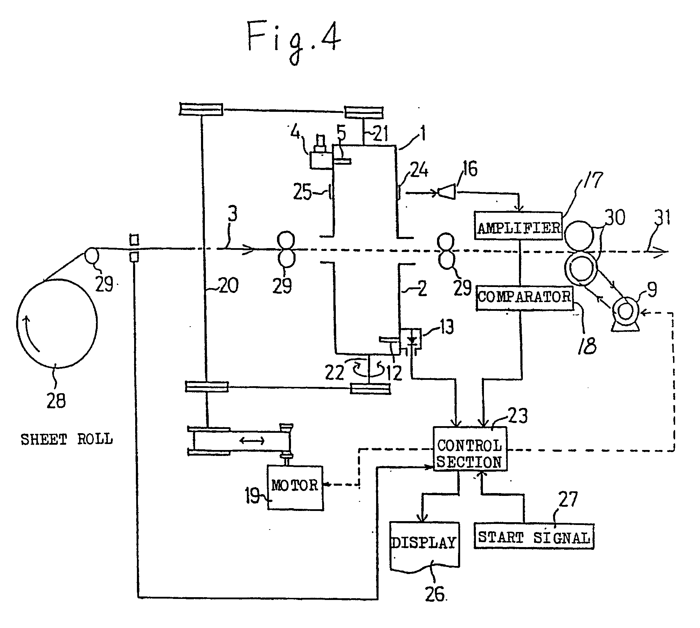

Fig. 4 shows an embodiment of the invention wherein to observe two-dimensional molecular orientation characteristics of sheets, a narrow sample is taken in the flow direction or width direction from the sheet roll wound up at the reel part and the apparatus of the invention is applied to such sample. In addition, the polarization plane rotating mechanism and the detecting means using an optical sensor are the same as those shown In Fig 3. A sheet roll 28 of narrow sample is unwound from an unillustrated reel stand and passed over a guide roll 29 and through the nip of sheet feed nip rolls 30. In addition, it is preferable to make it possible to take measurements from the front end of the sheet 3 by providing a lead tape 31 at said front end. Such sheet feed nip rolls 30 are driven by a variable speed motor 9. Further, its operation and stoppage are optionally set by signals from the control section 23.

To describe the usage in more detail, the rotative speed of the reversible motor 19 is set to rotate the waveguides 1 and 2 at a required rotative speed, while the amount of rotation and measurement-intended stop time of the sheet feed motor 9 are set to feed the sheet 3 at a required speed. Further, the reflecting tape 24 for the waveguide 1 is set at the initial waiting angle, while the emitting antenna 5 is emitting linearly polarized waves. When a measurement start signal 27 is sent to the control section 23, the latter emits an operation start signal to the sheet feed motor 9 on the basis of the program inputted thereinto in advance, and when the first measuring place reaches the middle between the waveguides 1 and 2, the control section emits an operation stop signal to the sheet feed motor 9 and at the same time it emits a forward rotation start signal to the reversible motor 19, which thereby rotates the waveguides 1 and 2 in the forward direction from the initial waiting angle. When the optical sensor 16 passes by the reflecting tape 25, a forward rotation stop signal is emitted to the reversible motor 19, and the waveguides 1 and 2 are stopped at the next waiting angle. During this time, the control section 23 stores or memorizes as the first-time measured values the amounts of attenuation corresponding to the individual angles in 180$^\circ$ from the amounts of attenuation received by the receiving antenna 12. Subsequently, upon the lapse of the preset stop time, the control section 23 again operates the sheet feed motor 9 to feed the sheet 3 and stop the second-time measurement place at the middle between the waveguides 1 and 2, while emitting a backward rotation start signal to the reversible motor 19. This time, reversely to the previous time, the waveguides 1 and 2 are reversely rotated from the waiting angle and the amounts of attenuation corresponding to the individual angles in 180$^\circ$ are stored as the second-time measured values. Thereafter, the same procedures as the above are repeated and the results are computed and outputted to a display section 26 such as a printer, X-Y plotter, or the like.

Examples of measurements of orientation by the method of the present invention will now be concretely described.

Example 1

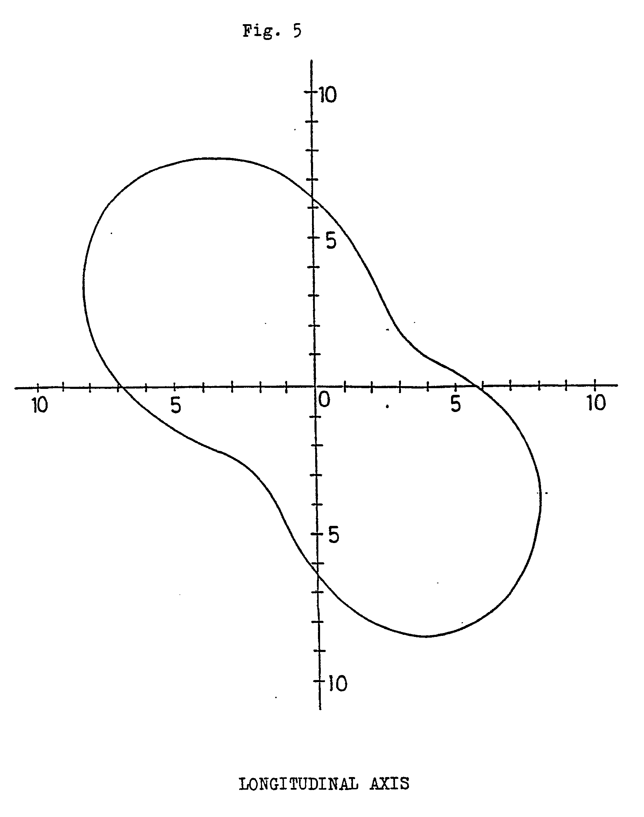

A 70-$\mu$m thick polyethylene terephthalate sheet sample obtained by stretching with a tenter-method biaxial stretching apparatus was measured by a molecular orientation measuring apparatus constructed in the manner shown in Fig. 1 used in the present invention. The waveguides 1 and 2 used were in the form of a rectangle with an opening size of 58.1 mm x 29.1 mm. First, the upstream side of longitudinal direction of said sample was made the direction of the reflecting tape 15 and then the sample was measured using linearly polarized waves of 3.5 GHz while rotating it at 6 rpm. A graph was obtained in which the amount of attenuation for each angle was represented by the distance from the origin, as shown in Fig. 5. As is clear from Fig. 5, since the direction in which the amount of attenuation is at a maximum is a direction reversely turned about 45° from the longitudinal direction, it was readily ascertained that the direction of molecular orientation was a direction turned counterclockwise about 45° from the longitudinal direction. However, the time needed from obtainment of the sample till determination of the orientation was only about 5 minutes.

Example 2

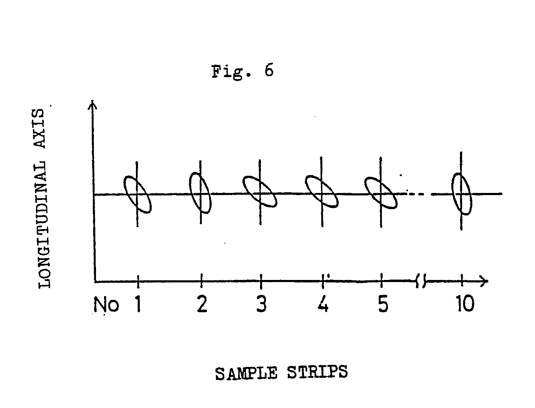

A 5-m wide polyethylene terephthalate sheet obtained under the same conditions as in Example 1 was slit along the direction of flow into 10 equal strips to provide elongated samples. Such samples were measured by a molecular orientation measuring apparatus constructed in the manner shown in Fig. 4. A feed rate of 200mm/pitch, a stop time of 1 second, and a rotative speed of the reversible motor 19 to provide a waveguide rotative speed of 10 rpm were set in the control section 23. Fig. 6 schematically illustrates the molecular orientations in the 10 slit strips.

Example 3

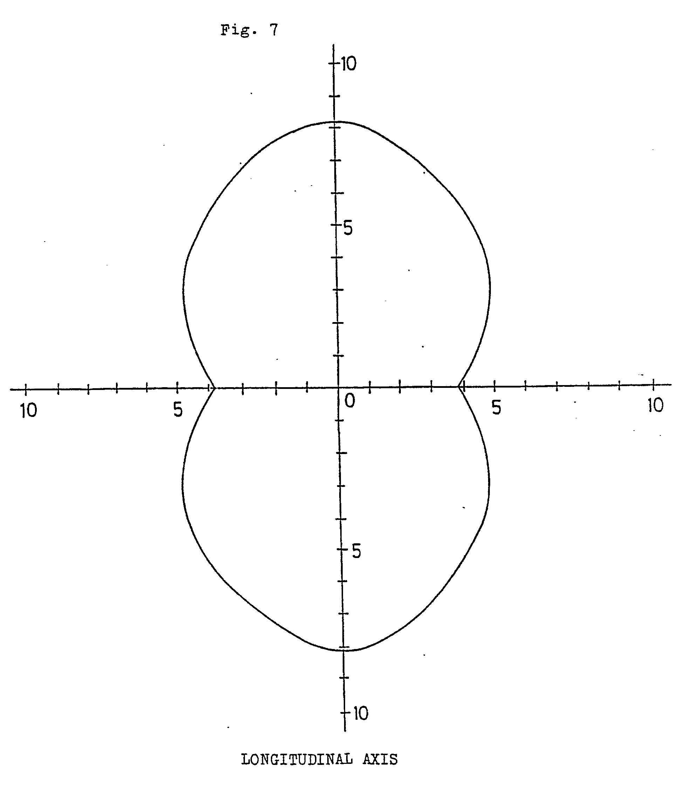

A 200-$\mu$m thick alumina silicate sample obtained by the tape casting forming method was measured by the apparatus of the invention constructed in the manner shown in Fig. 3. Waveguides 1 and 2 having the same size and shape as those used in Example 1 were used, and the upstream side of longitudinal direction of said sample was made the direction of the reflecting tape 24 and then the sample was measured using linearly polarized waves of 3.5 GHz while rotating the waveguides 1 and 2 at a rotative speed of 30 rpm. As a result, a graph as shown in Fig. 7 was obtained in which the amount of attenuation for each angle is represented by the distance from the origin. As is clear from Fig. 7 since the direction in which the amount of attenuation is at a maximum coincides with the upward or downward direction of the sample, in the sample in this example it was readily ascertained that the molecular orientation is of longitudinal direction.

In the above Examples 1, 2 and 3, a sample of sheet is taken at the winder part of a machine such as a stretching apparatus just upon the sheet roll having fallen to the part, and the sample is measured in an off-line. However, if a molecular orientation measuring device as shown in Fig. 3 would be incorporated as an in-line system into the stretching apparatus at an appropriate downstream portion from the stretching station, then the checking of the abnormality of orientation could be more quickly made so that a significant improvement of yield in sheet production might be expected.

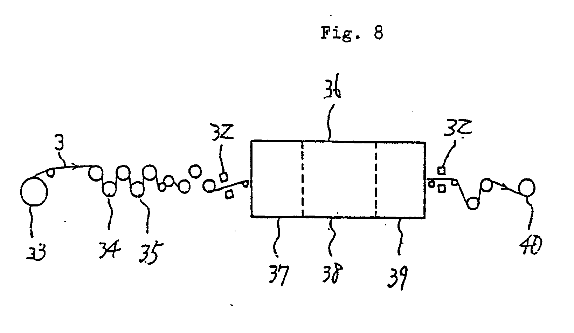

Fig. 8 shows the embodiment of a biaxial stretching and tentering apparatus incorporating the device 32 of the invention therein as an in-line system. In the operation of this apparatus, to longitudinally stretch an unstretched sheet 3 from a roll 33, the sheet 3 is preheated on a preheating roll 34 and passed through a stretching roll 35 which rotates at higher circumferential speed than that of the upstream portion. Next, the sheet 3 is passed through a preheating zone 37 of a tentering part 36 to a stretching zone where the sheet 3 is widthwise stretched by clipping. Then the sheet is passed through a thermoset zone 39 where the temperature of the sheet falls, and wound up again into a winder roll 40.

In the above embodiment, the molecular orientation measuring device 32 of the invention is placed between the stretching roll 35 and the tentering part 36 as shown in Fig. 8. However, the device can be placed between the tentering part 36 and the winder roll 40 to measure the molecular orientation of the sheet. It is noted in either of the two cases that the operater can observe the stretched result of the sheet to produce the highest grade of it. Further, the device 32 according to the invention may be of course fixedly placed at one or more positions within a traversal line of the sheet to achieve the orientation measuring at one or more (series of) spots. However, the device according to the invention may be mounted to a scanning frame or the like mechanism to achieve the orientation measuring in the scan of the frame, discretely or continuously.

As has been described so far, according to the molecular orientation measuring technique of the invention, a checkup of the molecular orientation of sheets can be made extremely easily and in a short-time, making it possible to cope with abnormality during its early stage, so that the occurrence of rejects can be kept to a minimum.

## Claims

1. A method of measuring the orientation of the constituents of web or sheet products by using a cavity resonator composed of a pair of wave guides having in their bottoms a transmitting antenna and a receiving antenna, respectively, and opposed at their openings to each other with a small clearance defined therebetween, said method comprising the steps of:

inserting a sample portion of said web or sheet product into said clearance,

emitting linearly polarized microwaves from said transmitting antenna toward said open ends to allow them to fall on the surface of said sample portion at right angles thereto while producing a relative motion between the plane of polarization of microwaves and said sample portion around the axis of said cavity resonator,

receiving the microwaves guided from the waveguide disposed on the transmitting side via the sample portion in said clearance to the waveguide disposed on the receiving side so as to find the amount of microwaves absorbed by said sample portion, and

determining the orientation of the constituent of said web or sheet product from the angular position of said sample portion, where said amount of absorption is at a maximum, relative to said plane of polarization.

2. A method as set forth in Claim 1, wherein the orientation to be measured is the molecular orientation of said web or sheet product.

3. A method as set forth in Claim 1, wherein said web or sheet product is a plastic web or sheet.

4. A method as set forth in Claim 1, wherein said web or sheet product is a ceramic web or sheet.

5. A method as set forth in Claim 1, wherein the sample portion of said web or sheet product is rotated in said small clearance, thereby producing relative rotation between it and said plane of polarization.

6. A method as set forth in Claim 1, wherein said sample portion is fixedly supported in said small clearance, while the portion of the cavity resonator including at least the transmitting antenna and receiving antenna is rotated, thereby producing relative rotation between said plane of polarization and said sample portion.

7. A method as set forth in Claim 1, wherein the orientation of the constituent of one sample portion is measured during 180° rotation of said cavity resonator, whereupon the web or sheet including this sample portion is advanced one step to insert the subsequent sample portion into said small clearance and the orientation of the constituent of this portion is measured, such operation being repeated.

8. An apparatus for measuring the orientation of the constituents of web or sheet products, comprising:

a cavity resonator composed of a pair of waveguides having in their bottoms a transmitting antenna and a receiving antenna, respectively, and opposed at their openings to each other with a small clearance defined therebetween,

means whereby a sample portion of a web or sheet product inserted into said clearance is supported around the outer peripheries of said openings,

rotatively driving means for rotatively driving either said cavity resonator or said sample portion supporting means around the axis of the former to thereby produce relative rotation therebetween,

angle detecting means for detecting, relative to the machine frame, the angular position of the cavity resonator or sample portion rotatively driven by said rotatively driving means,

a control section for energizing said transmitting antenna while starting said rotatively driving means in response to a measurement start signal and at the same time associating the intensity of the microwaves intercepted by said receiving antenna with the angular position detected by said angle detecting means so as to display or record it, and

means for making said display or record.

9. An apparatus as set forth in Claim 8, wherein said rotatively driving means drives said sample portion support means.

10. An apparatus as set forth in Claim 8, wherein said rotatively driving means drives said cavity resonator.

11. An apparatus as set forth in Claim 10, wherein said sample portion support means consists of a conveyor mechanism for passing a web or sheet through said small clearance, said conveyor mechanism being adapted to feed said web or sheet stepwise so that predetermined sample portions are successively positioned in said small clearance.

**Revendications**

1.  Procédé de mesure de l'orientation des constituants de produits en bande ou en feuille, par lequel on utilise une cavité résonnante constituée d'une paire de guides d'ondes ayant, en leurs fonds, une antenne de transmission et une antenne de réception, respectivement, et dont les ouvertures sont opposées l'une à l'autre, un espace intermédiaire étant défini entre eux, le procédé comprenant les étapes consistant à :
    insérer une portion d'échantillon du produit en feuille ou en bande, au sein de l'espace intermédiaire ;
    émettre des micro-ondes à polarisation rectiligne, à partir de l'antenne de transmission en direction des extrémités ouvertes, afin de leur permettre de tomber à angle droit sur la surface de la portion d'échantillon, tout en imprimant un mouvement relatif entre le plan de polarisation des micro-ondes et la portion de l'échantillon autour de l'axe de la cavité résonnante ;
    recevoir les micro-ondes guidées par le guide d'ondes disposé sur le côté de transmission, via la portion d'échantillon au sein de l'espace intermédiaire, en direction du guide d'ondes disposé sur le côté récepteur, de façon à trouver la quantité de micro-ondes absorbées par la portion d'échantillon; et déterminer l'orientation du constituant du produit en feuille ou en bande, à partir de la position angulaire de la portion d'échantillon, dans laquelle la quantité d'absorption est à son maximum, par rapport au plan de polarisation.

2.  Procédé selon la revendication 1, dans lequel l'orientation à mesurer est l'orientation moléculaire du produit en feuille ou en bande.

3.  Procédé selon la revendication 1, dans lequel le produit en feuille ou en bande est une feuille ou une bande en matière plastique.

4.  Procédé selon la revendication 1, dans lequel le produit en feuille ou en bande est une bande ou une feuille céramique.

5.  Procédé selon la revendication 1, dans lequel on fait tourner la portion d'échantillon du produit en feuille ou en bande, au sein de l'espace intermédiaire, en imprimant ainsi une rotation relative entre l'échantillon et le plan de polarisation.

6.  Procédé selon la revendication 1, dans lequel la portion d'échantillon est supportée à demeure au sein de l'espace intermédiaire, tandis que l'on fait tourner la portion de la cavité résonnante englobant au moins l'antenne de transmission et l'antenne de réception, imprimant ainsi une rotation relative entre le plan de polarisation et la portion d'échantillon.

7.  Procédé selon la revendication 1, dans lequel on mesure l'orientation du constituant d'une portion d'échantillon, au cours de la rotation de 180° de la cavité résonnante ; à la suite de quoi, on fait avancer d'un pas la bande ou la feuille englobant cette portion d'échantillon afin d'insérer la portion suivante d'échantillon au sein de l'espace intermédiaire et on mesure l'orientation du constituant de cette portion, une telle opération étant répétée.

8.  Appareil destiné à mesurer l'orientation des constituants de produits en feuille ou en bande, comprenant :
    une cavité résonnante constituée d'un paire de guides d'ondes munis, en leurs fonds, d'une antenne de transmission et d'une antenne de réception, respectivement, et dont les ouvertures sont opposées l'une à l'autre, un espace intermédiaire étant défini entre eux ;
    un moyen par lequel une portion d'échantillon d'un produit en feuille ou en bande insérée au sein de l'espace intermédiaire, est supporté autour des contours externes des ouvertures ;
    un moyen d'entraînement rotatif destiné à entraîner en rotation, soit la cavité résonnante, soit le moyen supportant la portion d'échantillon, autour de l'axe de la cavité, afin d'imprimer ainsi une rotation relative entre ces derniers ;
    un moyen de détection d'angle destiné à détecter, par rapport au bâti de la machine, la position angulaire de la cavité résonnante ou de la portion d'échantillon entraînée en rotation par le moyen

EP 0 160 488 B1

d'entraînement rotatif ;

une section de commande destinée à exciter l'antenne de transmission, tandis que l'on fait démarrer le moyen d'entraînement rotatif en réponse à un signal de déclenchement de mesure et, à associer simultanément l'intensite des micro-ondes interceptées par l'antenne réceptrice à la position angulaire détectée par le moyen destiné à cet effet, de façon à l'afficher ou à l'enregistrer ; et

un moyen destiné à mettre en oeuvre cet affichage ou cet enregistrement.

9. Appareil selon la revendication 8, dans lequel le moyen d'entraînement rotatif entraîne le moyen de support de portion d'échantillon.

10. Appareil selon la revendication 8, dans lequel le moyen d'entraînement rotatif entraîne la cavité résonnante.

11. Appareil selon la revendication 10, dans lequel le moyen de support de portion d'échantillon est constitué d'un mécanisme transporteur destiné a faire passer une bande ou une feuille à travers l'espace intermédiaire, ce mécanisme transporteur étant conçu pour acheminer la bande ou la feuille en pas à pas, de telle sorte que des portions d'échantillons prédéterminées se trouvent successivement au sein de l'espace intermédiaire.

## Ansprüche

1. Verfahren zur Messung der Orientierung von Bestandteilen in Folien oder dergleichen unter Verwendung eines Hohlraum-Resonators, gebildet durch ein Paar von Wellenleitern, von denen der eine am Boden eine Sendeantenne und der andere eine Empfangsantenne aufweist, die an ihren Öffnungen mit einem kleinen, einen Zwischenraum bildenden Abstand einander gegenüber angeordnet sind, **gekennzeichnet** durch folgende Schritte:

   Einsetzen eines Probestücks der Folie in den Zwischenraum,

   Ausstrahlen linear polarisierter Mikrowellen von der Sendeantenne zu der Öffnung des Wellenleiters, so daß sie unter einem rechten Winkel auf die Oberfläche der Probe auftreffen, wobei eine Relativbewegung zwischen der Polarisationsebene der Mikrowellen und der Probe um die Achse des Hohlraum-Resonators erzeugt wird,

   Empfangen der Mikrowellen, die von dem Wellenleiter auf der Sendeseite über die Probe im dem Zwischenraum zu dem Wellenleiter auf der Empfangsseite geführt werden, um den Betrag der durch die Probe absorbierten Mikrowellen zu ermitteln und

   Bestimmung der Orientierung der Bestandteile der Folie aus der Winkelstellung der Probe relativ zur Polarisationsebene, bei der der Betrag der Absorbtion ein Maximum ist.

2. Verfahren nach Anspruch 1, bei welchem die zu messende Orientierung die molekulare Orientierung der Folie ist.

3. Verfahren nach Anspruch 1, bei welchem die Folie eine Kunststoffolie ist.

4. Verfahren nach Anspruch 1, bei welchem die Folie eine keramische Folie ist.

5. Verfahren nach Anspruch 1, dadurch **gekennzeichnet**, daß die Probe der Folie in dem Zwischenraum rotiert wird, wodurch eine Relativdrehung zwischen ihr und der Polarisationsebene erzeugt wird.

6. Verfahren nach Anspruch 1, dadurch **gekennzeichnet**, daß die Probe in dem Zwischenraum fest angeordnet ist, während der Teil des Hohlraumresonators, der wenigstens die Sendeantenne und die Empfangsantenne umfaßt, rotiert wird, wodurch eine Relativdrehung zwischen der Polarisationsebene und der Probe erzeugt wird.

7. Verfahren nach Anspruch 1, dadurch **gekennzeichnet**, daß die Orientierung des Probenbestandteiles während einer 180°-Drehung des Hohlraumresonators gemessen wird, worauf dann die Folie einschließlich des Probestücks um einen Schritt weiterbewegt wird, um das nachfolgende Probestück in den Zwischenraum einzuführen, und daß dann die Orientierung des Bestandteils dieses Probenstückes gemessen wird, wobei die Operation wiederholt wird.

8. Vorrichtung zur Messung der Orientierung von Bestandteilen in Folien, **gekennzeichnet** durch

einen Hohlraum-Resonator, bestehend aus einem Paar von Wellenleitern, von denen der eine am Boden eine Sendeantenne und der andere eine Empfangsantenne aufweist, und die an ihren Öffnungen mit einem kleinen, einen Zwischenraum bildenden Abstand einander gegenüber angeordnet sind

Mittel, durch die ein Probestück einer Folie, das in den Zwischenraum eingesetzt ist, am äußeren Rand der Öffnungen gehalten ist,

einen Drehantrieb zum Drehen entweder des Hohlraum-Resonators oder der Probenhaltemittel um die Achse des ersteren,

eine Winkelmeßeinrichtung zum Messen der Winkelstellung des durch den Drehantrieb gedrehten Hohlraum-Resonators oder der gedrehten Probe relativ zum Maschinengestell,

eine Steuereinrichtung zum Speisen der Sendeantenne beim Starten des Drehantriebs aufgrund eines Meßbeginnsignals und gleichzeitig zum Verknüpfen der von der Empfangsantenne aufgenommenen Mikrowellenintensität mit der von der Winkelmeßeinrichtung gemessenen Winkelposition, um diese anzuzeigen oder aufzuzeichnen sowie Mittel zur Durchführung dieser Anzeige oder Aufzeichnung.

9. Vorrichtung nach Anspruch 8, dadurch **gekennzeichnet**, daß der Drehantrieb die Probenhaltemittel antreibt.

10. Vorrichtung nach Anspruch 8, dadurch **gekennzeichnet**, daß der Drehantrieb den Hohlraum-Resonator antreibt.

11. Vorrichtung nach Anspruch 1, dadurch **gekennzeichnet**, daß die Probenhaltemittel aus einem Fördermechanismus zum Fördern der Folie durch den kleinen Zwischenraum bestehen, wobei der Fördermechanismus zum schrittweisen Zuführen der Folie ausgebildet ist, derart, daß vorbestimmte Probestücke nacheinander in dem kleinen Zwischenraum positioniert werden.

# Fig.1

# Fig.2

AMOUNT OF ATTENUATION

ANGLE OF RERATIVE ROTATION

A(0°)  C  D  B(360°)

# Fig.3

AMPLIFIER

COMPARATOR

CONTROL
SECTION

START SIGNAL

MOTOR

DISPLAY
SECTION

# Fig.4

SHEET ROLL

AMPLIFIER

COMPARATOR

CONTROL
SECTION

MOTOR

DISPLAY

START SIGNAL

Fig. 5

LONGITUDINAL AXIS

Fig. 6

SAMPLE STRIPS

Fig. 7

LONGITUDINAL AXIS

Fig. 8